# EUROPÄISCHE PATENTSCHRIFT

(11) **EP 0 886 588 B1**
(45) Veröffentlichungstag und Bekanntmachung des Hinweises auf die Patenterteilung: **10.05.2000**
(21) Anmeldenummer: 97908230.2
(22) Anmeldetag: 13.03.1997
(51) Int. Cl.: B60R 11/00

(54) **ABDECKHAUBE FÜR EIN BAUTEIL, INSBESONDERE EIN GEHÄUSE**
COVER FOR A COMPONENT, IN PARTICULAR A HOUSING
CAPOT POUR ELEMENT CONSTITUTIF, NOTAMMENT BOITIER

(30) Priorität: 13.03.1996 DE 19609895
(43) Veröffentlichungstag der Anmeldung: 30.12.1998
(73) Patentinhaber: Wilhelm Sihn jr. KG., 75219 Niefern-Öschelbronn (DE)
(72) Erfinder: SCHNÜRER, Marco, D-75179 Pforzheim (DE); OTTO, Hermann-Rainer, D-75177 Pforzheim (DE); WOLFF, Hartmut, D-75015 Bretten (DE)
(74) Vertreter: Leitner, Waldemar, Dr. techn.
(86) Internationale Anmeldenummer: EP9701280
(87) Internationale Veröffentlichungsnummer: WO9733772

(56) Entgegenhaltungen:
- EP-A- 0 313 420
- DE-A- 2 415 854
- US-A- 4 736 539
- PATENT ABSTRACTS OF JAPAN vol. 095, no. 004, 31.Mai 1995 & JP 07 002027 A (MASPRO DENKOH CORP), 6.Januar 1995,
- PATENT ABSTRACTS OF JAPAN vol. 018, no. 464 (E-1598), 29.August 1994 & JP 06 152211 A (NIPPONDENSO CO LTD), 31.Mai 1994,

## Beschreibung

Die Erfindung betrifft eine Abdeckhaube für ein Bauteil, insbesondere ein Gehäuse.

Eine derartige Abdeckhaube ist bekannt. Die bei diesen Hauben eingesetzte Verankerung desselben auf dem Trägerelement mittels einer einen Schnapphaken verwendenden Rastverbindung besitzt den Nachteil, daß zur Montage und insbesondere zur Demontage des Haubenkörpers am bzw. vom Trägerelement, z.B. eines Karosserieblechs eines Kraftfahrzeugs, ein Hilfswerkzeug erforderlich ist, oder daß diese Arbeitsvorgänge in nachteiliger Art und Weise nur vom Innenraum des Kraftfahrzeuges durchgeführt werden können. Dieses ist insbesondere dann von Nachteil, wenn die Abdeckhaube zur Überdeckung eines Antennengehäuses eines Kraftfahrzeuges eingesetzt wird, da bei der Montage der Abdeckhaube stets die Gefahr besteht, daß das zur Montage der Haube erforderliche Werkzeug auf das Karosserieblech fällt und sichtbare Spuren hinterläßt, so daß das Kraftfahrzeug in nachteiliger Art und Weise nachlackiert werden muß.

Aus der DE-A-24 15 854 ist eine Abdeckhaube (Deckel) für ein Bauteil (Verbandskasten) bekannt, die einen das Bauteil überdeckenden, aus Kunststoff bestehenden Haubenkörper aufweist, der über eine Rastverbindung mit einem Trägerelement (Schale) lösbar verbindbar ist, wobei die an der Abdeckhaube angeordnete Rastverbindung durch ein Verbindungselement (Rastfeder) gebildet ist, das sich vom Haubenkörper ausgehend zum Trägerelement hin erstreckt, und das mit einem fest mit dem Trägerelement verbundenen, ein Rastelement (Öffnung) aufweisenden Anschlagelement in Eingriff bringbar ist, wobei das Rastelement mit dem Verbindungselement zur Arretierung der Abdeckhaube am Trägerelement in Eingriff bringbar ist, wobei das Verbindungselement durch ein an der Abdeckhaube angeordnetes Betätigungselement von seiner die Abdeckhaube am Trägerelement arretierende Position, in der das Rastelement des Anschlagelements mit dem Verbindungselement in Eingriff steht, in eine zweite Position, in der das Rastelement außer Eingriff ist, bewegbar ist.

Es ist Aufgabe der Erfindung, eine Abdeckhaube der bekannten Art derart weiterzubilden, daß sie inbesonders einfacher Art und Weise montierbar ist.

Die Aufgabe wird erfindungsgemäß durch die im Anspruch 1 enthaltenen Merkmale gelöst.

Die erfindungsgemäße Abdeckhaube besitzt den Vorteil, daß es durch die beschriebene Ausbildung der Rastverbindung besonders einfach ist, das Haubenelement vom Trägerelement dadurch zu demontieren, daß ein Demontagedruck auf das Haubenelement ausgeübt wird, welcher bewirkt, daß das Verbindungselement des Haubenkörpers ausgelenkt wird, so daß der Schnapphaken des mit dem Verbindungselement zusammenwirkenden, fest mit dem Trägerelement verbundenen Anschlagselements aus der Aufnahmeöffnung des ersten Verbindungselements herausgedrückt wird. Diese vorzugsweise werkzeuglos oder nur mit einem einfachen stumpfen Hilfswerkzeug von außen durchführbare Demontage der erfindungsgemäßen Abdeckhaube von ihrem Trägerelement besitzt den Vorteil, daß ein Zerkratzen des die erfindungsgemäße Abdeckhaube umgebenden Bereichs des Trägerelements praktisch ausgeschlossen ist. Desweiteren besitzt die derart leicht auf dem Trägerelement, insbesondere einem Karosserieblech, montierbare und demontierbare Abdeckhaube den Vorteil, daß im Nachlackierungsfall nurmehr die erfindungsgemäße Abdeckhaube und nicht mehr das gesamte Gehäuse, z. B. eine Antenne, abgenommen werden muß.

Eine vorteilhafte Weiterbildung der Erfindung sieht vor, daß die Aufnahmeöffnung des Verbindungselements des erfindunsgemäßen Haubenelements in ihrem mit dem Schnapphaken des Anschlagselements in Eingriff stehenden Bereichs einen gekrümmten Verlauf aufweist. Auf diese Art und Weise ist es besonders einfach möglich, daß Herstellungs- oder Montagetoleranzen der erfindungsgemäßen Abdeckhaube sowie Unebenheiten des die Abdeckhaube tragenden Trägerelements ausgeglichen werden können.

Eine weitere vorteilhafte Weiterbildung der Erfindung sieht vor, daß der Schnapphaken einen komplementär zum gekrümmten Bereich der Aufnahmeöffnung des ersten Verbindungselements verlaufende Ausgestaltung aufweist. Diese Maßnahme besitzt den Vorteil, daß auch bei einem breiter ausgebildeten Schnapphaken ein besonders einfacher Ausgleich von Montage- und Herstellungstoleranzen sowie von Unebenheiten des Trägerelements für die Abdeckhaube erfolgen kann.

Weitere vorteilhafte Weiterbildungen der Erfindung sind Gegenstand der Unteransprüche.

Weitere Vorteile und Einzelheiten der Erfindung sind dem Ausführungsbeispiel zu entnehmen, das im folgenden anhand der Figuren beschrieben wird. Es zeigen:
- Figur 1: eine Ansicht eines Ausführungsbeispiels einer Abdeckhaube,
- Figur 2: einen Querschnitt entlang der Linie II der Figur 1,
- Figur 3: einen Längsschnitt durch das Ausführungsbeispiel der Figur 1 entlang der Linie III-III,
und
- Figur 4: einen im Vergleich zur Darstellung der Figur 3 verschwenkte Position der Abdeckhaube.

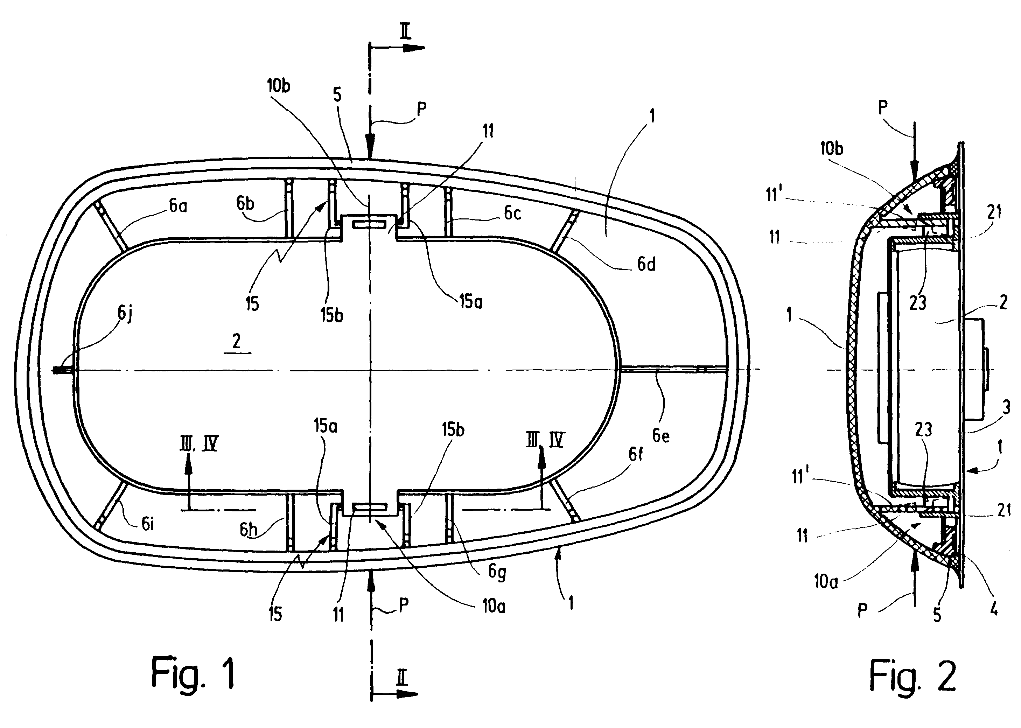

Die in den Figuren 1 und 2 dargestellte, allgemein mit 1 bezeichnete Abdeckhaube besitzt eine kuppelförmige Gestalt und überdeckt ein Gehäuse 2, z.B. eine Antenne, die auf einem als Trägerelement 3 fungierenden Karosserieblech eines Kraftfahrzeuges in an und für sich bekannter und daher nicht näher beschriebenen Art und Weise befestigt ist. Zwischen einem Umfangsrand 5 der Abdeckhaube 1 und dem Karosserieblech 3 ist ein rundumlaufendes Dichtelement 4 angeordnet. Um einen Haubenkörper 1' der Abdeckhaube 1 in entsprechendem Abstand vom Gehäuse 2 zu halten, sind Abstandselemente 6a-6j vorgesehen, welche sich vom Haubenkörper 1' ausgehend in Richtung des Gehäuses 2 bzw. zum Trägerelement 3 hin erstrecken. Ein derartiger Aufbau ist bekannt und muß daher nicht mehr näher beschrieben werden.

Wichtig ist nun die Art und Weise, wie die Abdeckhaube 1 am Trägerelement 3 befestigbar ist. Die hier beschriebene Konstruktion verwendet im wesentlichen das bekannte Prinzip einer Rastverbindung mit einem Schnapphaken, wobei dieses bekannte Prinzip - welches es bisher erforderte, die Rastverbindung mittels Werkzeugen oder vom Kraftfahrzeuginneren her zu realisieren -, in besonders einfacher Art und Weise dahingehend modifiziert wird, daß wenigstens eine von die Abdeckhaube 1 am Trägerelement 3 arretierenden Rastverbindungen 10a, 10b durch eine einfache Kraftbeaufschlagung in Richtung der Pfeile P vom Äußeren der Abdeckhaube 1 her herstellbar und/oder lösbar ist.

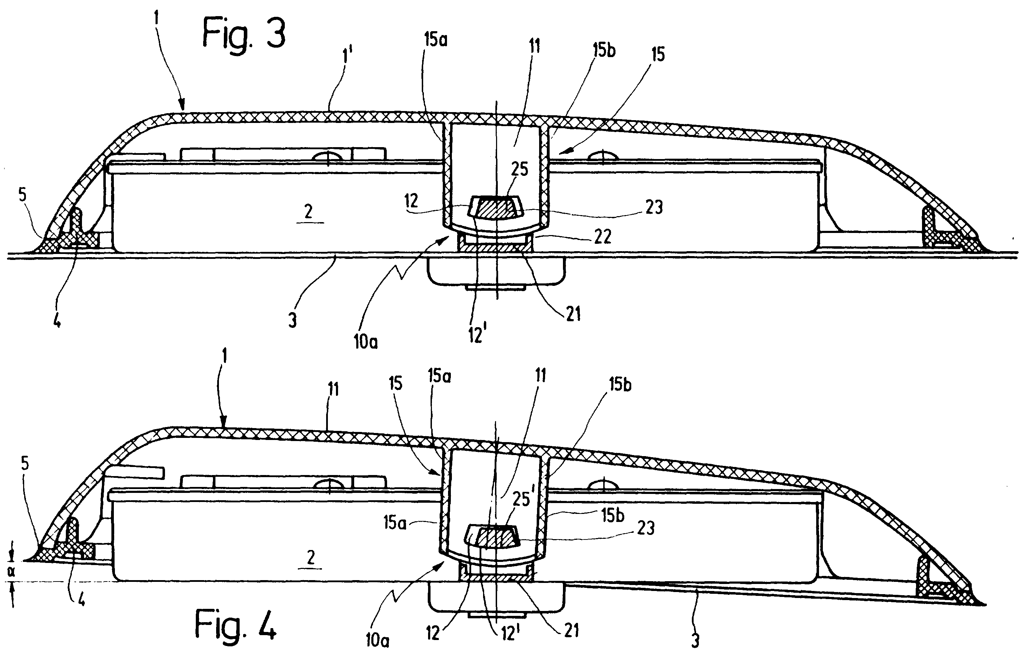

Die Ausbildung der beiden Rastverbindungen 10a, 10b wird anhand der Figuren 2 und 3 erläutert. Jede der Rastverbindungen 10a, 10b weist ein Verbindungselement 11 auf, das vom Umfangsbereich 5 der Abdeckhaube 1 beabstandet in ihrem Inneren angeordnet ist und sich vom Haubenkörper 1' der Abdeckhaube 1 ausgehend in Richtung des Trägerelements 3 erstreckt. Das Verbindungselement 11 der Abdeckhaube 1 ist durch ein weiter unten noch näher beschriebenes Betätigungselement 15 von einer in der Figur 2 durchgezogen dargestellten ersten Position in eine in der Figur 2 strichliert dargestellte zweite Position bewegbar: in der ersten Position liegt eine Außenfläche 11' des Verbindungselements 11 an einem fest mit dem Trägerelement 3 verbundenen Anschlagelement 21 an, wobei ein Zapfen 23 eines Schnapphakens 22 durch eine Ausnehmung 12 des ersten Verbindungselements 11 hindurchtritt und derart die Abdeckhaube 1 am Trägerelement 3 arretiert. In der zweiten Position ist der Schnapphaken 22 aus der Ausnehmung 12 des ersten Verbindungselement 11 zurückgezogen, so daß die Rastverbindung der Abdeckhaube 1 mit dem Trägerelement 3 gelöst ist und die Abdeckhaube 1 vom Trägerelement 3 entfernbar ist.

Das die Kraftbeaufschlagung der Abdeckhaube 1 in Richtung der Pfeile P auf das Verbindungselement 11 der Abdeckhaube 1 übertragenden und derart dessen Auslenkung bewirkenden Betätigungselement ist dabei derart ausgeführt, daß es einerseits am Verbindungselement 11 ansetzt und andererseits mit dem Haubenkörper 1' verbunden ist. Das Betätigungselement 15 wird hierbei vorzugsweise durch zwei voneinander beabstandeten Wandelemente 15a, 15b ausgebildet, welche am Verbindungselement 11 an entgegengesetzten Seiten angreifen.

Um nun Herstellungs- und/oder Montagetoleranzen der Abdeckhaube 1 sowie Unebenheiten des Karosserieblechs, also des Trägerelements 3 für die Abdeckhaube auffangen zu können, kann optional vorgesehen sein, daß die Aussparung 12 des ersten Verbindungselements 11 in ihrem mit dem Zapfen 23 des Schnapphakens 22 in Eingriff stehenden Bereich einen gekrümmten Verlauf 12' aufweist, welcher insbesondere aus den Figuren 3 und 4 ersichtlich ist. Der vorzugsweise kreisbogenförmig ausgeführte Verlauf 12' der Aussparung 12 des ersten Verbindunselements 11 erlaubt es, daß die Abdeckhaube 1 um einen definierten Schwenkbereich a gedreht werden kann. Bei einem schmalen Zapfen 23 des Schnapphakens 22 ist es nicht erforderlich, daß auch dieser in seinem mit dem gekrümmten Bereich 12' zusammenwirkenden Bereich 25' einen entsprechenden Verlauf aufweist. Da es jedoch aus Gründen der mechanischen Stabilität bevorzugt wird, zumindest den Zapfen 23 des Schnapphakens 22 breit auszubilden, ist es von Vorteil, daß auch dieser Schnapphaken 22 - wie aus den Figuren 3 und 4 ersichtlich ist, in seinem Bereich 25 eine komplementär zum Bereich 12' der Aussparung 12 verlaufende Ausgestaltung aufweist.

Dadurch, daß die Abdeckhaube 1 zumindest im Bereich der Rastverbindungen 10a, 10b aus elastisch deformierbaren Material besteht, kehrt der Haubenkörper 1' nach dem Aufbringen des Montage- bzw. Demontagedrucks wieder in seine ursprüngliche Form zurück.

## Patentansprüche

1. Abdeckhaube für ein Bauteil, insbesondere ein Gehäuse (2), die einen das Bauteil (2) zumindest teilweise überdeckenden Haubenkörper (1') aufweist, der entlang seines Umfangsrandes (5) über mindestens eine Rastverbindung (10a, 10b) mit einem Trägerelement (3) lösbar verbindbar ist, wobei mindestens eine der im Inneren der Abdeckhaube (1) angeordneten Rastverbindungen (10a, 10b) im wesentlichen durch ein Verbindungselement (11) gebildet ist, das vom Umfangsrand (5) des Haubenkörpers (1') der Abdeckhaube (1) beabstandet angeordnet ist und sich vom Haubenkörper (1') ausgehend zum Trägerelement (3) hin erstreckt, und das mit einem fest mit dem Trägerelement (3) verbundenen, ein Rastelement (22) aufweisenden Anschlagelement (21) in Eingriff bringbar ist, wobei das Verbindungselement (11) der Abdeckhaube (1) eine Ausnehmung (12) für das Rastelement (22) des fest mit dem Trägerelement (3) verbindbaren Anschlagelements (21) aufweist, wobei das Rastelement (22) in die Aussparung (12) des Verbindungselements (11) zur Arretierung der Abdeckhaube (1) am Trägerelement (3) eintretbar ist, wobei das Verbindungselement (11) durch ein im Inneren der Abdeckhaube (1) angeordnetes und das Verbindungselement (11) mit dem Haubenkörper (1') verbindendes Betätigungselement (15; 15a, 15b) von seiner die Abdeckhaube (1) am Trägerelement (3) arretierenden Position, in der das Rastelement (22) des Anschlagelements (21) in die Aussparung (12) des Verbindungselements (11) eintaucht, in eine zweite Position, in der das Rastelement (22) aus der Aussparung (12) zurückgewichen ist, bewegbar ist, so daß eine durch eine von der Außenseite der Abdeckhaube (1) erfolgende Kraftbeaufschlagung (P) bewirkte Verformung des zumindest im Bereich der mindestens einen Rastverbindung (10a, 10b) aus elastisch deformierbarem Material bestehenden Haubenkörpers (1') der Abdeckhaube (1) auf das Verbindungselement (11) übertragbar ist.

2. Abdeckhaube nach Anspruch 1, dadurch gekennzeichnet, daß in der arretierten Position der Abdeckhaube (1) eine Außenfläche (11') des Verbindungselements (11) am Anschlagselement (21) anliegt.

3. Abdeckhaube nach Anspruch 1, dadurch gekennzeichnet, daß das Betätigungselement (15) zwei voneinander beabstandete Wandelemente (15a, 15b) aufweist, welche am Verbindungselement (11) an entgegengesetzten Seiten angreifen.

4. Abdeckhaube nach einem der vorangehenden Ansprüche, dadurch gekennzeichnet, daß das Rastelement des Anschlagelements (21) als ein Schnapphaken (22) mit einem Zapfen (23) ausgebildet ist.

5. Abdeckhaube nach einem der vorangehenden Ansprüche, dadurch gekennzeichnet, daß die Aussparung (12) in ihrem mit dem Rastelement (22) zusammenwirkenden Bereich (12') einen gekrümmten Verlauf aufweist.

6. Abdeckhaube nach Anspruch 5, dadurch gekennzeichnet, daß der Zapfen (23) des Rastelements (22) in seinem mit dem gekrümmten Bereich (12') der Aussparung (12) des Verbindungselements (11) zusammenwirkenden Bereich (25') einen gekrümmten Verlauf aufweist.

7. Abdeckhaube nach einem der vorangehenden Ansprüche, dadurch gekennzeichnet, daß das von der Abdeckhaube (1) zumindest teilweise überdeckte Bauteil (2) eine Antenne eines Kraftfahrzeugs ist.

## Claims

1. Covering cap for a component, particularly a housing (2), comprising a cap body (1') which at least partly covers the component (2), which cap body is adapted to be detachably joined to a carrier element (3) along its peripheral edge (5) by means of at least one snap-in connection (10a, 10b), at least one of the snap-in connections (10a, 10b) arranged inside the covering cap (1) being substantially formed by a connecting element (11) which is arranged at a distance from the peripheral edge (5) of the cap body (1') of the covering cap (1) and extends outward from the cap body (1') towards the carrier element (3) and which is adapted to be engaged with a stop element (21) securely joined to the carrier element (3) and having a snap-in element, the connecting element (11) of the covering cap (1) including a cut-out (12) for the snap-in element (22) of the stop element (21) adapted to be securely joined to the carrier element (3), the snap-in element (22) being adapted to be inserted into the cut-out (12) of the connecting element (11) in order to lock the covering cap (1) on the carrier element (3), the connecting element (11) being adapted to be moved by means of an actuating element (15; 15a; 15b) arranged inside the covering cap (1) and joining the connecting element (11) to the cap body (1') from its position which locks the covering cap (1) on the carrier element (3), in which the snap-in element (22) of the stop element (21) is inserted into the cut-out (12) of the connecting element (11) into a second position in which the snap-in element (22) has withdrawn from the cut-out (12), so that a deformation of the cap body (1') of the covering cap (1) consisting at least in the region of at least one snap-in connection (10a, 10b) of elastically deformable material, said deformation being caused by the application of a force (P) from the outside of the covering cap (1) is adapted to be transmitted to the connecting element (11).

2. Covering cap as claimed in Claim 1, characterised in that in the locking position of the covering cap (1), an outer face (11') of the connecting element (11) rests against the stop element (21).

3. Covering cap as claimed in Claim 1, characterised in that the actuating element (15) has two wall elements (15a, 15b) some distance apart which grip the connecting element (11) on opposite sides.

4. Covering cap as claimed in any one of the preceding claims, characterised in that the snap-in element of the stop element (21) is designed as a snap hook (22) with a lug (23).

5. Covering cap as claimed in any one of the preceding claims, characterised in that the cut-out (12) has a curved contour in its region (12') which cooperates with the snap-in element (22).

6. Covering cap as claimed in Claim 5, characterised in that the lug (23) of the snap-in element (22) has a curved contour in its region (25') which cooperates with the curved region (12') of the cut-out (12) of the connecting element (11).

7. Covering cap as claimed in any one of the preceding claims, characterised in that the component (2) which is at least partly covered by the covering cap (1) is an aerial of a motor vehicle.

## Revendications

1. Cache pour un élément constitutif, en particulier un boîtier (2), qui comprend un corps de cache (1') qui recouvre au moins en partie l'élément constitutif et qui peut être assemblé de manière amovible le long de son bord périphérique (5) avec un élément support (3) par au moins un assemblage par enclenchement (10a, lOb), dans lequel au moins l'un des assemblages par enclenchement (10a, lOb) réalisé sur l'intérieur du cache (1) est formé sensiblement par un élément d'assemblage (11), qui est disposé à une distance donnée du bord périphérique (5) du corps (1') du cache (1) et qui s'étend depuis le corps du cache (1') jusque vers l'élément support (3) et qui peut être mis en prise avec un élément de butée (21) assemblé de manière fixe avec l'élément support (3) et muni d'un élément de blocage (22), dans lequel l'élément d'assemblage (11) du cache (1) est muni d'un évidement (12) destiné à l'élément de blocage (22) de l'élément de butée (21) assemblé de manière fixe avec l'élément support (3), dans lequel l'élément de blocage (22) peut entrer en prise dans l'évidement (12) de l'élément d'assemblage (11) afin de bloquer le cache (1) contre l'élément support (3), dans lequel l'élément d'assemblage (11), par l'intermédiaire d'un élément de manoeuvre (15 ; 15a, 15b) monté à l'intérieur du cache (1) et reliant l'élément d'assemblage (11) avec le corps du cache (1'), peut se déplacer depuis sa position dans laquelle il bloque le cache (1) contre l'élément support (3) et dans laquelle l'élément de blocage (22) de l'élément de butée (20) plonge dans l'évidement (12) de l'élément d'assemblage (11), vers une deuxième position dans laquelle l'élément de blocage (22) est sorti de l'évidement (12), de telle sorte que, sous l'effet d'une force (P) exercée depuis le côté extérieur du cache (1), il se produit une déformation du corps (1') du cache (1), qui est réalisé au moins en matière déformable de manière élastique dans la zone de l'un au moins des assemblages par enclenchement (10a, lOb), laquelle déformation peut être transmise vers l'élément d'assemblage (11).

2. Cache selon la revendication 1, caractérisé en ce que dans la position de blocage du cache (1), une surface extérieure (11') de l'élément d'assemblage (11) entre en contact avec l'élément de butée (21).

3. Cache selon la revendication 1, caractérisé en ce que l'élément de manoeuvre (15) comprend deux parois (15a, 15b) écartées à une distance donnée l'une de l'autre, lesquelles agissent contre l'élément d'assemblage (11) sur les côtés opposés.

4. Cache selon l'une quelconque des revendications précédentes, caractérisé en ce que l'élément de blocage de l'élément de butée (21) est conçu en forme de crochet de blocage (22) muni d'un pivot (23).

5. Cache selon l'une quelconque des revendications précédentes, caractérisé en ce que l'évidement (12), dans la zone (12') agissant conjointement avec l'élément de blocage (22), présente un tracé courbe.

6. Cache selon la revendication 5, caractérisé en ce que le pivot (23) de l'élément de blocage (22), dans sa zone (25') agissant conjointement avec la zone courbe (12') de l'évidement (12) de l'élément d'assemblage (11), présente un tracé courbe.

7. Cache selon l'une quelconque des revendications précédentes, caractérisé en ce que l'élément constitutif (2) recouvert au moins en partie par le cache (1) est une antenne d'un véhicule automobile.
